# EUROPEAN PATENT APPLICATION

(11) **EP 3 675 002 A1**
(43) Date of publication of application: **01.07.2020**
(21) Application number: 18383006.6
(22) Date of filing: 28.12.2018
(51) Int. Cl.: G06Q 10/00

(54) **TRANSPORT TOLLING METHOD USING SECURE TRANSPORT TOLL TOKENS**

(71) Applicant: Atos Spain S.A., 28037 Madrid (ES)
(72) Inventor: FIELD, Daniel, E-28037 Madrid (ES); ROSA, Adolfo, E-28037 Madrid (ES)
(74) Representative: Plasseraud IP

(57) **Abstract**

This invention relates to a transport toll method which is anticipated and regulated and which is therefore based on secure, either blockchain or tangle, transport toll tokens which validity is checked at toll booths. A feedback is included, from toll booths to road operators manufacturing these secure transport toll tokens.

## Description

### FIELD OF THE INVENTION

The invention relates to transport tolling methods using secure transport toll tokens.

### BACKGROUND OF THE INVENTION

In prior art, there has been some conceptual contemplation of transport tolling system based on transport toll tokens made secure by blockchain technology. However, in such a contemplated system, there are quite a number of actors interfering with one another, running the risk to get at either failing in the system or global inefficiency or unattractiveness for potential clients, if needed information does not circulate the right way.

### SUMMARY OF THE INVENTION

The object of the present invention is to alleviate at least partly the above mentioned drawbacks.

More particularly, the invention aims at shifting the risk related to toll price variation off the shoulders of road operators, who propose this road servicing, to help them both better anticipate future traffic and better adapt road facilities maintenance, as well as to offer the possibility to shift this risk also off the shoulders of the road vehicles identifiers, which use this road servicing, to help them better plan future transport in a stable way, especially for professional road vehicles identifiers, dedicated to their business need, without excess need to tailor their activities to such possible toll price variation.

In a nutshell:
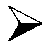 not only the invention offers possibilities both, to road operators, proposing road servicing (for instance driving on roads or highways), and to road vehicle identifiers, using road servicing, to shift toll price variation off their shoulders, allowing thereby for them to focus on their respective business, while introducing an intermediate in between, the road wholesalers who will take on their shoulders all the risk related to this toll price variation, even making their business of this risk management,
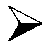 but also, in order to make the system efficient and attractive as a whole for all actors, i.e. road operators, road vehicles identifiers and road wholesalers, needed information is circulated the right way and in a secure way; therefore, a feedback from toll booth to transport toll token creating for regulating the quantities of such transport toll tokens which are created is considered important; therefore, a fluidity of circulation for transport toll tokens between all actors, while keeping security safe, included the use of blockchain or tangle and the checking via majority of servers within network ensuring security checking information remains always relevant and available, is also considered important.

This object is achieved with a transport tolling method, anticipated and regulated, in a transport toll network including road operators respectively associated to road areas, road wholesalers, servers managing said transport toll network, toll booths and road vehicles, comprising:
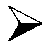 creating quantities of transport toll blockchain tokens and/or transport toll tangle tokens both called secure transport toll tokens, respectively by road operators,
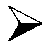 aggregating a number of said secure transport toll tokens into a reduced number of secure transport toll tokens batches, by road operators,
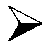 transmitting at least part of said secure transport toll tokens batches, by road operators to road wholesalers,
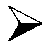 preferably exchanging at least part of said secure transport toll tokens batches among wholesalers,
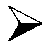 dividing at least part of said transmitted and/or exchanged secure transport toll tokens batches into corresponding secure transport toll tokens, by road wholesalers,
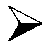 distributing at least part of said secure transport toll tokens to road vehicles identifiers, by road wholesalers,
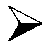 driving by a given road vehicle on a given road area corresponding to a given secure transport toll token distributed to said given road vehicle identifier corresponding to said given road vehicle,
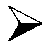 checking validity of said given distributed secure transport toll token, when said given road vehicle crosses checkpoint of a given toll booth, by a given managing server of said given toll booth, via polling other managing servers for validity of said given distributed secure transport toll token, a majority of positive or negative answers therefrom leading respectively to positive or negative validity checking,
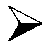 if said validity checking is positive, then:
   ∘ allowing said road vehicle to cross said checkpoint, by said given toll booth,
   ∘ transmitting information related to identifier of said given road vehicle crossing said checkpoint, by said given toll booth managing server, directly to said road operator having issued said given secure transport toll token, in order to feedback said quantities creating of said road operator,
   ∘ processing said secure transport toll token by said given managing server, so that said given secure transport toll token cannot be used twice,
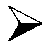 if said validity checking is negative, then either blocking said road vehicle at said checkpoint and/or emitting an alarm, by said given toll booth.

Preferred embodiments comprise one or more of the following features, which can be taken separately or together, either in partial combination or in full combination.

Preferably, said transmitting of said secure transport toll tokens batches, by road operators to road wholesalers, is performed on condition of a first payment, from said road wholesalers to said road operators, said distributing of said secure transport toll tokens to road vehicles identifiers, by road wholesalers, is performed on condition of a second payment, from said road vehicles identifiers to said road wholesalers, said second payment being more expensive than said first payment.

Hence, said help from intermediate actor who is road wholesaler, for an even more fluid circulation of secure transport toll tokens, is provided with a financial compensation.

Preferably, said exchanging among wholesalers is performed via a first central repository associated with a first market place where said secure transport toll tokens batches are traded.

Hence, this main centralized location for transport toll exchanges will help making even more fluid secure transport toll tokens circulation.

Preferably, said exchanging among wholesalers is performed via a second central repository associated with a second market place where said secure transport toll tokens batches are traded, after secure transport toll tokens batches having been unsuccessfully offered for trading in said first market place for a while.

Hence, this secondary centralized location for transport toll exchanges will help keeping fluid secure transport toll tokens circulation, by offloading part of it from main centralized location for transport toll exchanges.

Preferably, at least part of, preferably all of, said secure transport toll tokens are prepaid tokens.

Hence, these secure transport toll tokens are simpler to use.

Preferably, at least part of, preferably all of, said secure transport toll tokens are virtual tokens simply subtracted from road vehicles identifiers digital wallets containing said virtual tokens after said positive validity checking.

Hence, the use of these secure transport toll tokens is made even more fluid for the road vehicles identifiers.

Preferably, for transport toll blockchain tokens, said polling of other managing servers for validity of said given distributed secure transport toll token is performed by peer to peer blockchain protocol, and/or, for transport toll tangle tokens, said polling of other managing servers for validity of said given distributed secure transport toll token is performed by peer to peer tangle protocol.

Hence, information circulation during validity checking step is made even more fluid.

Preferably, road vehicles have road communicating units associated with road vehicles identifiers, so as to communicate with toll booths, so as to allow for said toll booths managing servers to perform said validity checking.

Hence, the validity checking step is fully automated between toll booths and road vehicles.

Preferably, said road vehicles communicating units are RFID transponders.

Hence, the used technology is simple and robust.

Preferably, said road vehicles communicating units belong to Internet of Things.

Hence, the used technology allows for data enrichment of the information exchanged as well as additional capabilities, between road vehicles and toll booths.

Preferably, in said transport toll network, said road operators and said road wholesalers and said managing servers and said toll booths and said road vehicles and possible central repositories, all communicate together via a single and same telecommunication network which is advantageously wireless.

Hence, the information circulation is made even more fluid.

Preferably, said quantities creating feedback is performed by one or more of: a big data processing, a deep learning processing, an artificial intelligence processing.

Hence, the quantities creating feedback can be made even more useful and more relevant, helping thereby road operators to better anticipate future traffic, and possibly future maintenance scheduling.

Preferably, said quantities creating feedback includes one or more of: a road vehicles identifier profiling, a secure transport toll tokens demand predicting, a data forwarding to one or more third parties outside said transport road network, advantageously on condition of a payment from said one or more third parties to said road operator having performed said quantities creating feedback.

Hence, the quantities creating feedback can be made even more useful and more relevant, helping thereby road operators to better anticipate future traffic and possibly future maintenance scheduling.

Besides, financial effort may be thereby more largely shared by additional actors within the system.

Preferably, if said validity checking is positive, then: transmitting information related to identifier of said given road vehicle crossing said checkpoint, by said given toll booth managing server, directly to said road operator having issued said given secure transport toll token, in order also to feedback managing and maintenance of road facilities, advantageously such as road vehicles parks and/or gas stations.

Hence, the quantities creating feedback can be made even more useful and more relevant, helping thereby road operators to better anticipate future traffic as well as future maintenance scheduling.

Preferably, said road area(s) is or are highway areas.

Hence, the transport tolling method is all the more interesting that highway areas are driving areas with tolls which are distributed respectively among well identified road operators.

Preferably, said road vehicles are freight lorries.

Hence, the fluidity need is all the more interesting for this specific type of road vehicles, where it is especially important to be able to anticipate future traffic load, for road operators as well as for road vehicles identifiers.

Further features and advantages of the invention will appear from the following description of embodiments of the invention, given as non-limiting examples, with reference to the accompanying drawings listed hereunder.

### BRIEF DESCRIPTION OF THE DRAWINGS

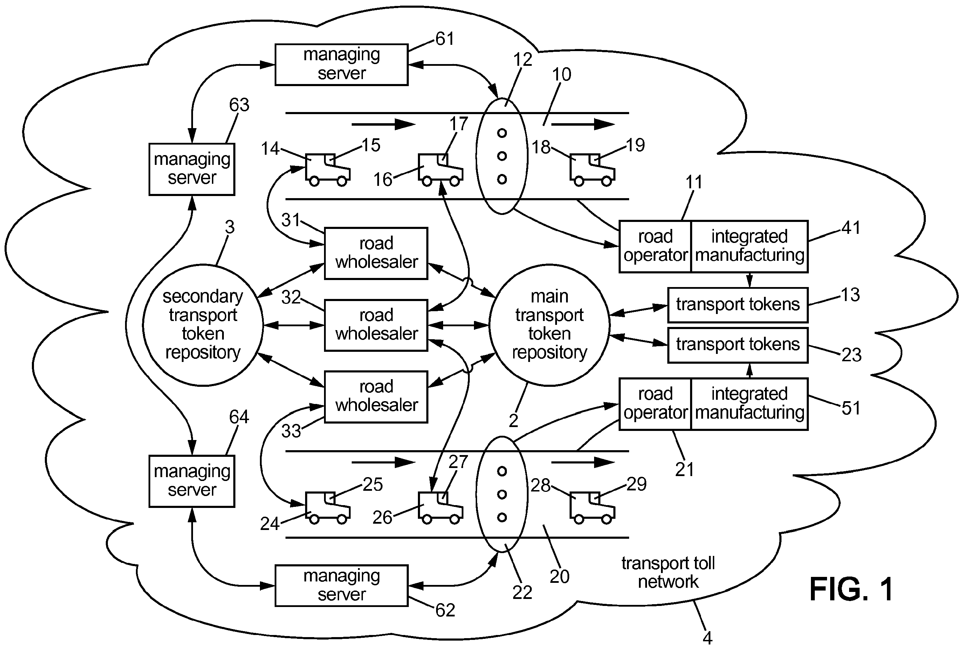

Fig. 1 shows an example of a transport toll network in which a transport tolling method according to an embodiment of the invention may be implemented.

### DETAILED DESCRIPTION OF THE INVENTION

Fig. 1 shows an example of a transport toll network in which a transport tolling method according to an embodiment of the invention may be implemented.

The transport tolling method, anticipated and regulated, is performed in a transport toll network 4 including road operators 11 and 12 respectively associated to road areas 10 and 20, road wholesalers 31, 32 and 33, servers 61, 62, 63 and 64 managing the transport toll network 4, toll booths 12 and 22, and road vehicles 14, 16, 18, 24, 26 and 28. Road vehicles 14, 16 and 18 drive on road area 10 and are checked when they cross toll booth 12 managed by server 61. Road vehicle 18 has already crossed toll booth 12, whereas road vehicles 14 and 16 have not yet crossed toll booth 12. Road vehicles 24, 26 and 28 drive on road area 20 and are checked when they cross toll booth 22 managed by server 62. Road vehicle 28 has already crossed toll booth 22, whereas road vehicles 24 and 26 have not yet crossed toll booth 22. Road vehicles 14, 16, 18, 24, 26 and 28 have respectively road communicating units 15, 17, 19, 25, 27 and 29 associated with corresponding road vehicles identifiers, so as to communicate with toll booths 12 and/or 22, so as to allow for toll booths 12 and/or 22 managing servers 61 an/or 62 to perform the validity checking. These road vehicles communicating units 15, 17, 19, 25, 27 and 29 are RFID transponders or road vehicles communicating units belonging to Internet of Things. In transport toll network 4, road operators 11 and 21 and road wholesalers 31 to 33 and managing servers 61 to 64 and toll booths 12 and 22 and road vehicles 14 to 28 and central repositories 2 and 3, all communicate together via a single and same telecommunication network which is advantageously wireless. All road vehicles 14 to 28 are freight lorries. Road areas 10 and 20 are highways areas.

Road operator 11 is managing road area 10 where road vehicles 14, 16 and 18 drive. Road area 10 includes a toll booth 12 managed by a managing server 61. Road operator 21 is managing road area 20 where road vehicles 24, 26 and 28 drive. Road area 20 includes a toll booth 22 managed by a managing server 62.

The road operator 11 creates quantities of transport toll blockchain tokens and/or transport toll tangle tokens both called secure transport toll tokens 13. Preferably, secure transport toll tokens 13 are transport toll blockchain tokens 13. The road operator 11 creates these secure transport toll tokens 13 via an integrated manufacturing capability 41 including blockchain protocol. The road operator 21 creates quantities of transport toll blockchain tokens and/or transport toll tangle tokens both called secure transport toll tokens 23. Preferably, secure transport toll tokens 23 are transport toll blockchain tokens 23. The road operator 21 creates these secure transport toll tokens 23 via an integrated manufacturing capability 51 including blockchain protocol.

In a first option, at least part of, preferably all of, secure transport toll tokens 13 and/or 23 are prepaid tokens. In a second option, alternative or in combination, at least part of, preferably all of, secure transport toll tokens 13 and/or 23 are virtual tokens simply subtracted from road vehicles identifiers 14 to 28 digital wallets containing these virtual tokens after said positive validity checking.

The road operator 11 aggregates a number of said secure transport toll tokens 13 into a reduced number of secure transport toll tokens 13 batches. The road operator 21 aggregates a number of said secure transport toll tokens 23 into a reduced number of secure transport toll tokens 23 batches.

The road operator 11 transmits at least part of these secure transport toll tokens 13 batches to a main transport token repository 2 where road wholesalers 31, 32 and 33 can buy these transport toll tokens 13 batches and then resell, buy or exchange, these transport toll tokens 13 batches between them. The road wholesalers 31, 32 and 33 can also afterwards resell, buy or exchange these transport toll tokens 13 batches between them in a secondary transport token repository 3. The road operator 21 transmits at least part of these secure transport toll tokens 23 batches to a main transport token repository 2 where road wholesalers 31, 32 and 33 can buy these transport toll tokens 23 batches and then resell, buy or exchange, these transport toll tokens 23 batches between them. The road wholesalers 31, 32 and 33 can also afterwards resell, buy or exchange these transport toll tokens 23 batches between them in a secondary transport token repository 3.

This exchanging among wholesalers 31 to 33 is performed via a main central repository 2 associated with a first market place where these secure transport toll tokens 13 and/or 23 batches are traded. This exchanging among wholesalers 31 to 33 is also afterwards performed via a secondary central repository 3 associated with a second market place where these secure transport toll tokens 13 and/or 23 batches are traded, after secure transport toll tokens 13 and/or 23 batches have been unsuccessfully offered for trading in this first market place for a while.

Road wholesalers 31, 32 and 33 divide at least part of said transmitted and/or exchanged secure transport toll tokens 13 and/or 23 batches into corresponding secure transport toll tokens 13 and/or 23.

Road wholesalers 31, 32 and 33 distribute at least part of said secure transport toll tokens 13 and/or 23 to road vehicles identifiers 14, 16, 18, 24, 26 and 28.

Here, road wholesaler 31 distributes a secure transport toll token 13 to vehicle identifier 14 corresponding to road vehicle 14, road wholesaler 33 distributes a secure transport toll token 13 to vehicle identifier 24 corresponding to road vehicle 24, road wholesaler 32 distributes a secure transport toll token 13 to vehicle identifier 16 corresponding to road vehicle 16 and a secure transport toll token 23 to vehicle identifier 26 corresponding to road vehicle 26. A road vehicle identifier may correspond to one or preferably to several road vehicles, and more preferably to several road vehicles driving on more than one road area.

Road vehicle 14 drives on road area 10 corresponding to a secure transport toll token 13 distributed to road vehicle 14 identifier. Road vehicle 16 drives on road area 10 corresponding to a secure transport toll token 13 distributed to road vehicle 16 identifier. Road vehicle 18 drives on road area 10 corresponding to a secure transport toll token 13 distributed to road vehicle 18 identifier. Road vehicle 24 drives on road area 20 corresponding to a secure transport toll token 23 distributed to road vehicle 24 identifier. Road vehicle 26 drives on road area 20 corresponding to a secure transport toll token 23 distributed to road vehicle 26 identifier. Road vehicle 28 drives on road area 20 corresponding to a secure transport toll token 23 distributed to road vehicle 28 identifier.

Toll booth 12 checks validity of each distributed secure transport toll token 13, for each road vehicle 14 or 16, when road vehicle 14 or 16 crosses checkpoint of toll booth 12, by managing server 61 of toll booth 12, via polling other managing servers 62, 63 and 64, for validity of this distributed secure transport toll token 13, a majority of positive or negative answers therefrom leading respectively to positive or negative validity checking. If said validity checking is positive, then toll booth allows road vehicle 14 or 16 to cross this checkpoint, by toll booth 12 which managing server 61 first transmits information related to identifier of road vehicle 14 or 16 crossing this checkpoint, directly to road operator 11 having issued this secure transport toll token 13, in order to feedback the quantities creating step of road operator 11, and second processes this secure transport toll token 13 so that this specific secure transport toll token 13 cannot be used twice, so cannot be used by another road vehicle. If the validity checking is negative, then the toll booth 12 either blocks road vehicle 14 or 16 at said checkpoint and/or emits an alarm. Validity checking has already been positive for road vehicle 18.

Toll booth 22 checks validity of each distributed secure transport toll token 23, for each road vehicle 24 or 26, when road vehicle 24 or 26 crosses checkpoint of toll booth 22, by managing server 62 of toll booth 22, via polling other managing servers 61, 63 and 64, for validity of this distributed secure transport toll token 23, a majority of positive or negative answers therefrom leading respectively to positive or negative validity checking. If said validity checking is positive, then toll booth allows road vehicle 24 or 26 to cross this checkpoint, by toll booth 22 which managing server 62 first transmits information related to identifier of road vehicle 24 or 26 crossing this checkpoint, directly to road operator 21 having issued this secure transport toll token 23, in order to feedback the quantities creating step of road operator 21, and second processes this secure transport toll token 23 so that this specific secure transport toll token 23 cannot be used twice, so cannot be used by another road vehicle. If the validity checking is negative, then the toll booth 22 either blocks road vehicle 24 or 26 at said checkpoint and/or emits an alarm. Validity checking has already been positive for road vehicle 28. For transport toll blockchain tokens 13 and/or 23, the polling of other managing servers 63 and 64 for validity of distributed secure transport toll tokens 13 and/or 23 is performed by peer to peer blockchain protocol.

The step of quantities creating feedback is performed by one or more of a big data processing, a deep learning processing, an artificial intelligence processing. The step of quantities creating feedback includes one or more of: a road vehicles identifier profiling, a secure transport toll tokens 13 and/or 23 demand predicting, a data forwarding to one or more third parties outside this transport road network 4, on condition of a payment from one or more third parties to road operator 11 and/or 21 having performed this quantities creating feedback.

If said validity checking is positive, then toll booth 12 managing server 61 transmits information related to identifier of road vehicle 14 or 16 crossing this checkpoint, directly to road operator 11 having issued secure transport toll token 13, in order also to feedback managing and maintenance of road facilities, such as road vehicles parks and/or gas stations.

If said validity checking is positive, then toll booth 22 managing server 62 transmits information related to identifier of road vehicle 24 or 26 crossing this checkpoint, directly to road operator 21 having issued secure transport toll token 23, in order also to feedback managing and maintenance of road facilities, such as road vehicles parks and/or gas stations.

The invention has been described with reference to preferred embodiments. However, many variations are possible within the scope of the invention.

## Claims

1. Transport tolling method, anticipated and regulated, in a transport toll network including road operators respectively associated to road areas, road wholesalers, servers managing said transport toll network, toll booths and road vehicles, comprising:
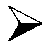 creating quantities of transport toll blockchain tokens and/or transport toll tangle tokens both called secure transport toll tokens, respectively by road operators,
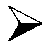 aggregating a number of said secure transport toll tokens into a reduced number of secure transport toll tokens batches, by road operators,
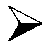 transmitting at least part of said secure transport toll tokens batches, by road operators to road wholesalers,
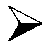 preferably exchanging at least part of said secure transport toll tokens batches among wholesalers,
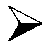 dividing at least part of said transmitted and/or exchanged secure transport toll tokens batches into corresponding secure transport toll tokens, by road wholesalers,
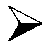 distributing at least part of said secure transport toll tokens to road vehicles identifiers, by road wholesalers,
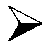 driving by a given road vehicle on a given road area corresponding to a given secure transport toll token distributed to said given road vehicle identifier corresponding to said given road vehicle,
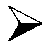 checking validity of said given distributed secure transport toll token, when said given road vehicle crosses checkpoint of a given toll booth, by a given managing server of said given toll booth, via polling other managing servers for validity of said given distributed secure transport toll token, a majority of positive or negative answers therefrom leading respectively to positive or negative validity checking,
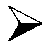 if said validity checking is positive, then:
∘ allowing said road vehicle to cross said checkpoint, by said given toll booth,
∘ transmitting information related to identifier of said given road vehicle crossing said checkpoint, by said given toll booth managing server, directly to said road operator having issued said given secure transport toll token, in order to feedback said quantities creating of said road operator,
∘ processing said secure transport toll token by said given managing server, so that said given secure transport toll token cannot be used twice,
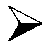 if said validity checking is negative, then either blocking said road vehicle at said checkpoint and/or emitting an alarm, by said given toll booth.

2. Transport tolling method according to claim 1, wherein:
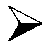 said transmitting of said secure transport toll tokens batches, by road operators to road wholesalers, is performed on condition of a first payment, from said road wholesalers to said road operators,
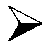 said distributing of said secure transport toll tokens to road vehicles identifiers, by road wholesalers, is performed on condition of a second payment, from said road vehicles identifiers to said road wholesalers,
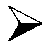 said second payment being more expensive than said first payment.

3. Transport tolling method according to claim 2, wherein:
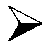 said exchanging among wholesalers is performed via a first central repository associated with a first market place where said secure transport toll tokens batches are traded.

4. Transport tolling method according to claim 3, wherein:
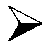 said exchanging among wholesalers is performed via a second central repository associated with a second market place where said secure transport toll tokens batches are traded, after secure transport toll tokens batches having been unsuccessfully offered for trading in said first market place for a while.

5. Transport tolling method according to any of preceding claims, wherein:
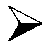 at least part of, preferably all of, said secure transport toll tokens are prepaid tokens.

6. Transport tolling method according to any of preceding claims, wherein:
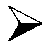 at least part of, preferably all of, said secure transport toll tokens are virtual tokens simply subtracted from road vehicles identifiers digital wallets containing said virtual tokens after said positive validity checking.

7. Transport tolling method according to any of preceding claims, wherein:
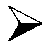 for transport toll blockchain tokens, said polling of other managing servers for validity of said given distributed secure transport toll token is performed by peer to peer blockchain protocol,
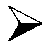 and/or, for transport toll tangle tokens, said polling of other managing servers for validity of said given distributed secure transport toll token is performed by peer to peer tangle protocol.

8. Transport tolling method according to any of preceding claims, wherein:
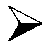 road vehicles have road communicating units associated with road vehicles identifiers, so as to communicate with toll booths, so as to allow for said toll booths managing servers to perform said validity checking.

9. Transport tolling method according to claim 8, wherein:
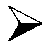 said road vehicles communicating units are RFID transponders.

10. Transport tolling method according to claim 8, wherein:
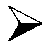 said road vehicles communicating units belong to Internet of Things.

11. Transport tolling method according to any of preceding claims, wherein:
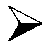 in said transport toll network, said road operators and said road wholesalers and said managing servers and said toll booths and said road vehicles and possible central repositories, all communicate together via a single and same telecommunication network which is advantageously wireless.

12. Transport tolling method according to any of preceding claims, wherein:
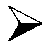 said quantities creating feedback is performed by one or more of:
∘ a big data processing,
∘ a deep learning processing,
∘ an artificial intelligence processing.

13. Transport tolling method according to any of preceding claims, wherein:
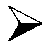 said quantities creating feedback includes one or more of:
∘ a road vehicles identifier profiling,
∘ a secure transport toll tokens demand predicting,
∘ a data forwarding to one or more third parties outside said transport road network, advantageously on condition of a payment from said one or more third parties to said road operator having performed said quantities creating feedback.

14. Transport tolling method according to any of preceding claims, wherein:
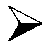 if said validity checking is positive, then:
∘ transmitting information related to identifier of said given road vehicle crossing said checkpoint, by said given toll booth managing server, directly to said road operator having issued said given secure transport toll token, in order also to feedback managing and maintenance of road facilities, advantageously such as road vehicles parks and/or gas stations.

15. Transport tolling method according to any of preceding claims, wherein:
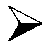 said road area(s) is or are highway areas.

16. Transport tolling method according to any of preceding claims, wherein:
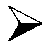 said road vehicles are freight lorries.
